## Europäisches Patentamt
## European Patent Office
## Office européen des brevets

(11) Publication number: **0 351 207**
**A2**

# (12) EUROPEAN PATENT APPLICATION

(21) Application number: **89307072.2**

(22) Date of filing: **12.07.89**

(51) Int. Cl.⁵: **C 03 B 35/20**

(30) Priority: **12.07.88 JP 173517/88**

(43) Date of publication of application:
**17.01.90 Bulletin 90/03**

(84) Designated Contracting States:
**BE DE ES FR GB IT SE**

(71) Applicant: **NIPPON SHEET GLASS CO. LTD.**
**5-11, Dosho-machi 3-chome**
**Chuo-ku Osaka-shi Osaka (JP)**

(72) Inventor: **Mizusugi, Tetsuya c/o Nippon Sheet Glass Co., Ltd.**
**5-11, Dosho-machi 3-chome Chuo-ku**
**Osaka-shi Osaka (JP)**

**Okajima, Yasunori c/o Nippon Sheet Glass Co., Ltd.**
**5-11, Dosho-machi 3-chome Chuo-ku**
**Osaka-shi Osaka (JP)**

(74) Representative: **Godwin, Edgar James et al**
**MARKS & CLERK 57-60 Lincoln's Inn Fields**
**London, WC2A 3LS (GB)**

The title of the invention has been amended (Guidelines for Examination in the EPO, A-III, 7.3).

(54) **Apparatus for transferring heated glass sheets.**

(57) A glass sheet transfer mechanism (10), free of conveyor rolls, conveys a heated glass sheet (G) from a heating station (2) to a mold station (46) for bending the glass sheet to a predetermined curvature. The transfer mechanism (10) utilizes conveyor plates, including a front plate (109) and side plates (111), for moving the glass sheet. The front plate (109) is provided with a particular structure in order to avoid detrimental effects to the curved glass caused by bending of the glass sheet due to the effects of its own weight, as well as to avoid any detrimental effects caused by bending at the front plate due to the weight of the glass sheet. A curvature is provided for the front plate, the curvature being complementary to the anticipated curvature to the glass sheet due to its own weight. Moreover, a vertically movable bearing member is provided in conformity with deformation of the glass sheet.

FIG.1

## Description

## APPARATUS FOR MANUFACTURING CURVED GLASS SHEETS

The present invention relates to an apparatus for manufacturing curved glass sheets, and more particularly to a transfer mechanism in such an apparatus for conveying glass sheets, softened by application of heat, from a heating station to a molding station including a structural arrangement for eliminating deformation of the glass sheets due to effects of the weight of the sheets.

Hardened shaped or curved glass sheets are widely used as automotive windshields. Such glass sheets are required to be accurately curved to the shape of an outer profile of an automobile and the shape of a window frame in which the glass sheet is to be mounted. The shaped glass sheet is also required to be free of any optical defects which would otherwise interfere with the clear vision of the automobile driver when looking through the glass sheet.

One of the most commonly practised processes of manufacturing curved glass sheets begins with the step of heating a flat glass sheet in a heating furnace up to a temperature where glass is deformed, i.e., the softening point of the glass. The heated glass sheet is then fed from the heating furnace to a mold assembly by a suitable conveyor means, where the sheet is curved to a desired curvature by the mold assembly. After the glass sheet has been bent to shape, it is fed to a cooling station by the conveyor means and quenched, or annealed, by application of a suitable coolant. The glass sheet is first heated and then quenched in order to make the sheet more resistant to breakage, and to cause the sheet to fracture into relatively small, relatively smoothly surfaced fragments that are less injurious to passengers than are large, jagged, fragments.

One apparatus for successively manufacturing panels of curved sheet glass, for use as windshield for automobiles, is known from Japanese Patent Publication No. 46-13272, 47-29166 and 59-43427, Japanese Laid-Open Patent Publication No 61-31324 or Japanese Patent Publication No. 61-32264. In these devices the glass sheet is carried out horizontally from a heating furnace for transfer to a lower mold. The glass sheet is placed above the lower mold, which bends the glass sheets to a prescribed shape, whether under the influence of gravity and the weight of the sheet or by pressing the sheet between an upper mold and the lower mold.

In any of the structures provided in Japanese Patent Publication No. 46-13272, 47-29166 and 59-43427 the heated glass sheet is transferred by conveyor rolls (or feed rolls) to a position above the lower mold, which receives the glass sheet from the conveyor rolls and wherein bending of the glass sheet is carried out under the action of the sheet's own weight or by a pressing step. The apparatus disclosed in Japanese Laid-Open Patent Publication No. 61-31324 is designed to transfer the glass sheet from a heating furnace to a position above a lower mold by means of conveyor rolls, and then to deliver the glass sheet onto the lower mold as the conveyor rolls are lowered. In the apparatus of Japanese Patent Publication No. 61-32264 the transferred glass sheet panels are raised by a vacuum-suction device. Therein, a raised glass sheet is delivered onto a ring mold which has been moved to position under the vacuum-suction device.

Thereafter, the apparatus disclosed in Japanese Patent Publication No. 46-13272, 47-29166 and 59-43427, as well as that disclosed in Japanese Laid-Open Publication No. 61-31324 are designed to deliver the glass sheet when the lower mold rises or when the conveyor rolls are lowered. Thus, recesses, or grooves, are formed in the lower mold to accommodate the conveyor rolls.

Because of such recesses, however, the structure of the lower mold is so complicated that difficulty is experienced in manufacture of the lower mold, and the glass sheet cannot be shaped over the entire surface of the lower mold. Moreover, jet holes for cooling air, to temper the glass sheet by quick cooling, cannot be formed at uniform intervals over the entire surface of the lower mold. Thus, in such a mold structure there results a non-uniform shaping and cooling of the glass sheet. Further, since the upper surface of the lower mold, which serves as the shaping surface, is only partly used for shaping the glass sheet, difficulty is experienced in shaping the glass sheet to the desired curvature. Still further, once the conveyor rolls have received a glass sheet from the heating furnace, the position of the rolls cannot be corrected. Thus, if the glass sheet has been transferred inaccurately from the heating furnace to the position on the conveyor rolls, the conveyor rolls cannot convey the sheet properly onto the upper surface of the lower mold.

Where the suction device is used to suck and raised the glass sheet as disclosed in Japanese Patent Publication No. 61-32264 there is no need of forming the recesses in the lower mold to accommodate the conveyor rolls. However, the suction device of the disclosed structure is required to be installed, resulting in size enlargement of the manufacturing apparatus, and in a corresponding significant increase in cost.

Still another difficulty with each of the above-mentioned apparatus is that , because the glass sheet is taken away from the conveyor rolls after the sheet has hit against a stopper, there occurs a slippage between the glass sheet and the conveyor rolls which may cause an optical distortion, even if the slippage occurs for quite a short time.

Another prior art form of glass sheet conveyor device is disclosed in U. S. Patent 4,353,552, wherein a number of conveyor rolls are spaced at equal intervals in the direction in which glass sheets are fed, the rolls having axes extending normally to that feeding direction. A glass sheet conveyed from a heating furnace by conveyor rolls disposed therein is transferred onto conveyor rolls in a bending station and then into a mold assembly where the glass sheet is stopped. In the 4,252,552 patent, when the glass sheet is stopped a lower mold below the conveyor rolls is lifted by a raising and lowering means until the upper surface of the lower mold is held against the lower surface of the glass sheet. The lower mold has a downwardly concave shaping surface with transverse grooves, extending across the feed direction of the glass sheet and spaced at the same intervals as the conveyor rolls. Thus, upon further raising of the lower mold the conveyor rolls are retracted into the grooves, thereby to support the glass sheet only on the upper surface of the lower mold. The glass sheet is thus shaped or curved into a configuration which is complementary to that of the shaping surface of the lower mold.

An upper mold is then lowered and attracts the glass sheet against its lower surface under vacuum suction, whereupon the upper mold is elevated to lift the glass sheet. A ring mold is then introduced between the upper and lower molds, and an evacuation device removes the vacuum from the upper mold, to allow the glass sheet to be transferred onto the ring mold. The ring mold has a larger curvature than the upper mold, to curve the marginal edge or the glass sheet to a larger curvature than that of the other areas of the glass sheets.

Identical or similar conveyor rolls are also disclosed in U. S. Patent Nos. 3 455 672; 3 782 916; 4 197 108; 4 272 274; 4 285 715; 4 430 110; and 4 589 901. Each of these references suffers from deficiencies similar to those hereinabove described.

Accordingly, there has been previously proposed and assigned to the applicant company hereof an apparatus for manufacturing curved glass structures, which is free of conveyor rolls between the heating station and the mold station. The device is described in Japanese Patent Application No. 62-86573 and corresponding U. K. Patent Application GB-A-2 208 074 , the disclosure of each of which is hereby incorporated herein by reference.

As described therein, the manufacturing apparatus includes a transfer mechanism including a front plate for supporting the lower surface of a front end of the heated glass sheet, and laterally opposing side plates for supporting the lower side surfaces of the glass sheet. The glass sheet from a heating furnace is received by the transfer mechanism wherein the pair of laterally opposing side plates are held in a closed position, and is delivered onto a lower mold by opening the side plates.

While the above described structure overcomes the various disadvantages caused by the prior art usage of conveyor rolls, the conveyed glass sheet is subject to bending by action of the force of gravity acting on the sheet itself. That is, while the glass sheet is being transferred to its position above the lower mold by the laterally opposing side plates and the front plate, the glass sheet is bent by its own weight, causing a slip between the glass sheet and the plates. Thus, the glass sheet may be placed on the lower mold in an erroneous position.

It would accordingly be desirable to be able to overcome the difficulties of the prior art, and particularly to provide an improved structure, free of conveyor rolls, for transferring curved glass sheet heated to near its softening point from a heating furnace to a position above a lower mold, and including a structural arrangement for preventing deficiencies in the manufacturing process due to deformation of the glass sheet under its own weight.

It would also be desirable to be able to provide apparatus for transferring heated curved glass sheet including a front plate for supporting the lower surface of a front portion of the glass sheet, wherein placement of the glass sheet in a widthwise position thereof is maintained irrespective of bending at the front plate due to deformation of the glass sheet under its own weight.

It would, more specifically, be desirable to be able provide a transfer mechanism for a heated glass sheet, including laterally opposing side plates which close to receive the glass sheet, travel to transfer the glass sheet to the lower mold, and open to deliver the glass sheet onto the lower mold, thus eliminating conveyor rolls, and further including a front plate for supporting the lower surface of the glass sheet, in which the front plate includes a structural arrangment for preventing deformation of the glass sheet by its own weight.

Still a more particular aim of the invention is to provide a transfer mechanism for heated glass sheet in which gravitational deformation of the glass sheet is prevented by providing a front plate with a curved shape complementary to deformation of the glass sheet due to its own weight and further by providing a vertically movable bearing member, which is movable in conformity with deformation of the glass sheet.

In accordance with the present invention there is accordingly provided, in an apparatus for manufacturing a curved glass sheet, a glass sheet transfer mechanism for conveying a heated glass sheet in a feed direction, from a heating station wherein the glass sheet has been heated substantially to its softening point onto a mold disposed downstream of the heating station. The transfer mechanism comprises a guiding means for the glass sheet, including a pair of laterally opposed side plates for supporting the lower surface of laterally spaced sides of the glass sheet, the side plates being displaceable to close and open a space therebetween for receiving and discharging the glass sheet, and a front plate for supporting the lower surface of a front portion of the glass sheet, the front plate having a curved shape complementary to deformation of the glass sheet due to the weight of the glass sheet and including a bearing member vertically movable in conformity with deformation of the glass sheet, thereby to maintain frictional contact between the glass sheet and the bearing member to prevent displacement of the glass sheet upon deformation at the front plate under its own weight.

The foregoing and other objects, features and advantages of the present invention will become more readily apparent from the following detailed description of preferred embodiments thereof when considered together with the accompanying drawings.

In accordance with the foregoing features of the invention, in the drawings:

FIGURE 1 is a front view of a curved glass sheet manufacturing apparatus according to the present invention;

FIGURE 2 is a plane view of the apparatus of Figure 1 including a detailed illustration of a glass sheet transfer mechanism therein;

FIGURE 3 is a side elevational view of the apparatus as viewed from the direction of the arrow A in Figure 1;

FIGURE 4 is an enlarged fragmentary view of Figure 2;

FIGURE 5 is a cross-sectional view taken along line B -B of Figure 4;

FIGURE 6 is a perspective view of front and side plates of the inventive transfer mechanism;

FIGURE 7 is a vertical cross-sectional view of the apparatus of Figure 3 as viewed looking to the right therein, showing a mechanism for providing vertical movement to bearing member 122 of Figure 6.

FIGURES 8a-8b show a specific embodiment of the mechanism used to provide vertical movement to bearing member 122 of Figures 6-7;

FIGURES 9a-9c show another embodiment of the mechanism used to provide vertical movement to bearing member 122 of Figures 6-7;

FIGURES 10a-10c show another embodiment of the mechanism used to provide vertical movement to bearing member 122 of Figures 6-7;

FIGURES 11a-11b show another embodiment of the mechanism used to provide vertical movement to bearing member 122 of Figures 6-7;

FIGURES 12a-12b show another embodiment of the mechanism used to provide vertical movement to bearing member 122 of Figures 6-7; and

FIGURES 13a-13f show various steps in operation of the transfer mechanism of the invention.

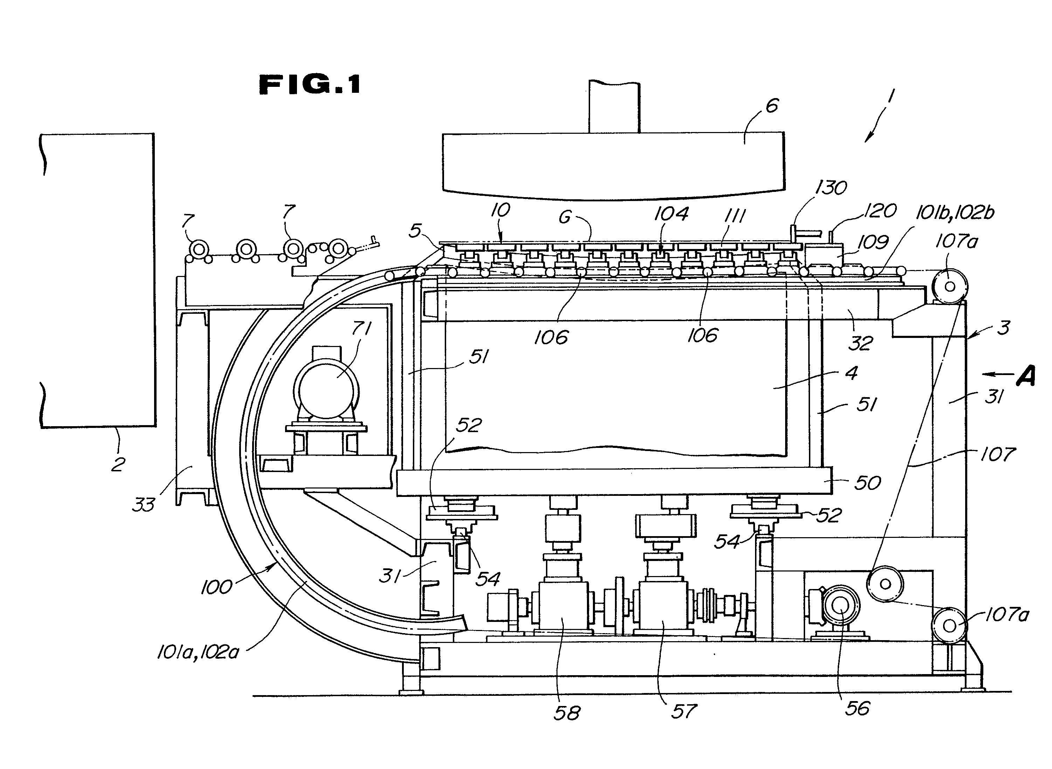

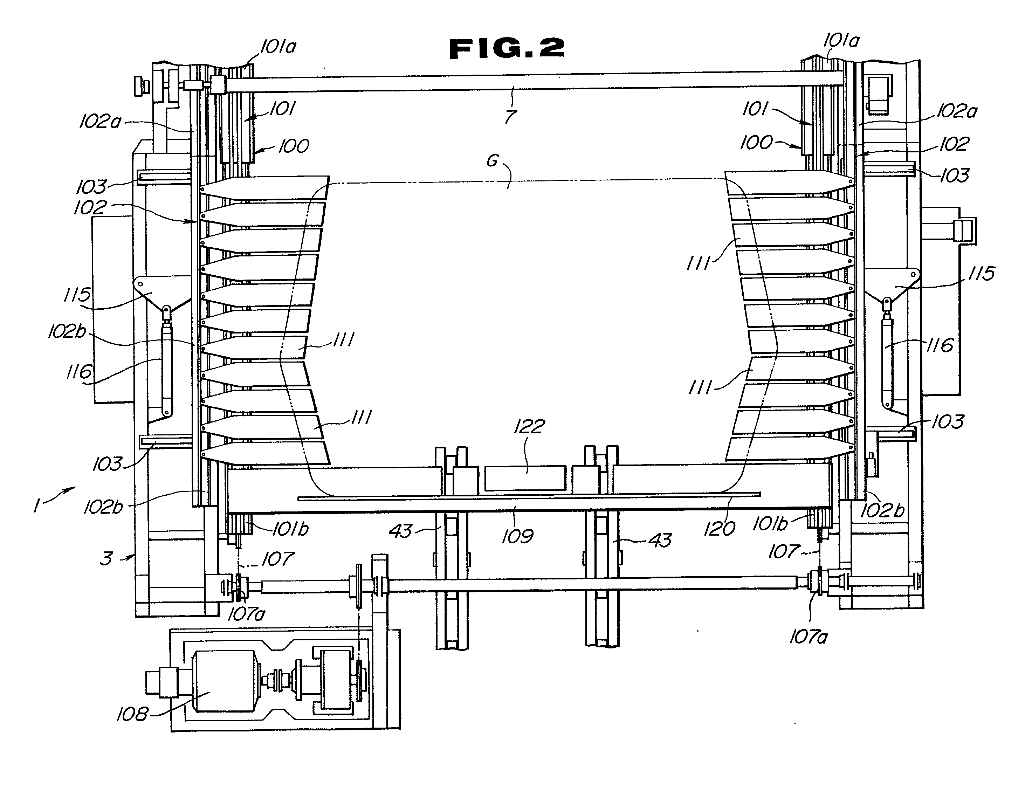

Referring now to the drawings, there is shown in Figures 1 through 3 a curved glass manufacturing apparatus 1 adjacent a heating furnace 2, a lower mold 4 and a ring mold 5, which are disposed in a fixed frame 3. Frame 3 is preferably fixed to the floor. A vertically movable upper mold 6 is disposed above lower mold 4 for bending the glass sheet G. Glass sheet G is conveyed from left to right in Figure 1 and from top to bottom in Figure 2.

Various components of the apparatus 1 are described in detail in Japanese Patent Application No. 62-86573 and corresponding U. K. Patent Application Serial No. GB-A-2 208 074, and details of the apparatus which are not pertinent to the improvement provided by the present invention are not repeated herein but may be understood upon reference to the above described patent documents and are to be considered as being incorporated herein by reference.

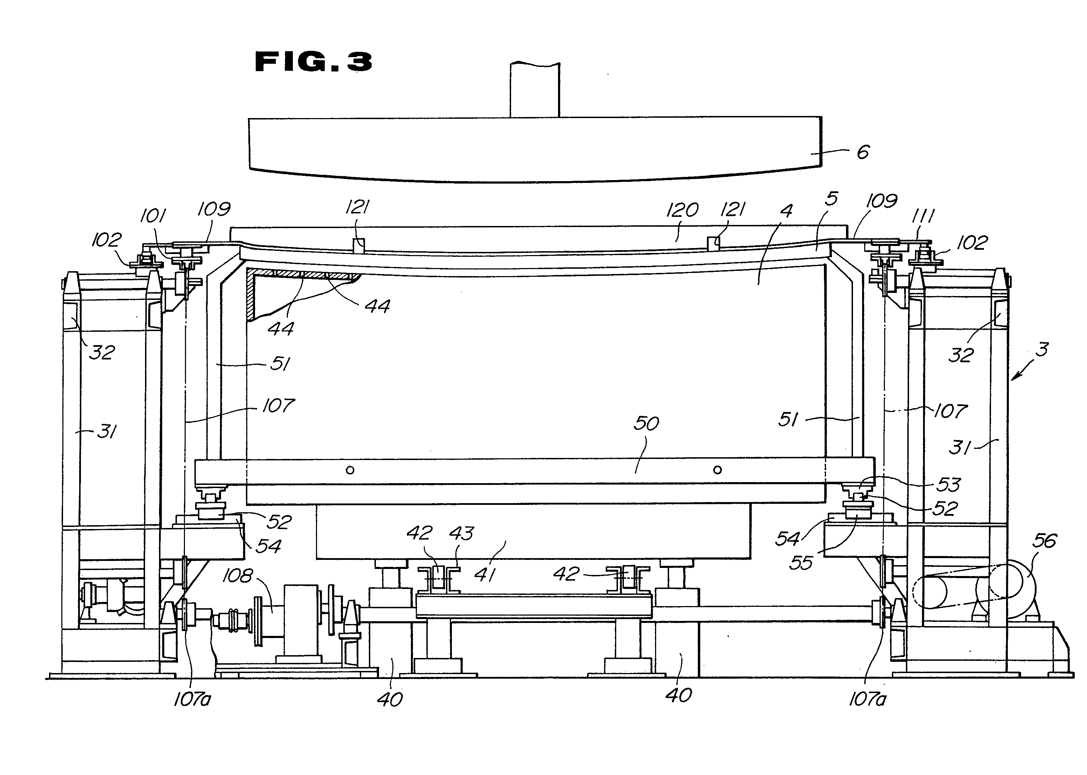

Referring to Figure 3, lower mold 4 is set on a support table 41. Support table 41 is vertically movable by a plurality of hydraulic raising and lowering devices, shown as cylinder units 40. As seen in Figures 2 and 3, two conveyor rails 43 extend in the feed direction of the glass sheet for carrying lower mold 4 into the apparatus. Each of the conveyor rails 43 has a number of rotatable rollers 42 to facilitate movement of the support table 41.

Lower mold 4 is in the form of a hollow box structure having an upper shaping surface which is upwardly concave, the upper surface having a curvature matching that of a lower shaping surface of upper mold 6, and including a number of jet holes 44 disposed in a zigzag pattern therein for ejecting cooling air. The upper mold 6 is also of a hollow box structure, including a number of air ejector jet holes for ejecting cooling air against the upper surface of the glass sheet G to quench the curved glass sheet G.

Ring mold 5, which curves the marginal edge of glass sheet G, is shaped to be substantially complementary to the outer profile of the glass sheet G to be curved. As seen in Figures 1 and 3, ring mold 5 is supported by a plurality of upstanding posts 51 erected on a support frame 50 having on a lower surface thereof guide portion 53 engaging intermediate rails 52 which extend in the longitudinal direction of the apparatus, defined as being to the right and left in Figure 1. The intermediate rails 52 are provided with guide portions 55 in the form of transverse projections for engaging guide rails 54 extending in the transverse direction of the apparatus (i.e., left and right in Figure 3). Moreover, the intermediate rails 52 include upwardly extending projections for engaging downwardly opening recesses of guide portions 53.

In operation, an oscillating motor 56 causes frame 50 to move longitudinally and transversely through gear mechanisms 57-58. The resulting movement of frame 50 thus follows an elliptical or a circular pattern, when viewed from above.

Frame 3 includes a plurality of upstanding frame members, or posts, 31 which are spaced from each other in the longitudinal and transverse directions, and a pair of horizontal frame members 32 mounted horizontally between the upper ends of posts 31. Near the heating furnace 2, i.e., on the upstream side of the main frame 3, there is provided a support frame 33 which includes at its top a plurality of conveyor rolls 7 for conveying glass sheet G towards a transfer mechanism 10 including the improvement of the present invention. Conveyor rolls 7 are operatively coupled to a motor 71 mounted on support frame 33 through a drive chain (not shown) and are rotated thereby.

Heating furnace 2 may be of the tunnel-type and is disposed upstream of, and close to, the support frame 33. A flat glass sheet G, moved by a conveyor device (not shown) is heated to its softening point in the furnace 2. The softened glass sheet G, while being conveyed out of an outlet opening in the downstream side of furnace 2, is received by conveyor rolls 7 on support frame 20. The conveyor rolls 7 then convey the glass sheet G downstream for transfer to the transfer mechanism 10 of the present invention. Transfer mechanism 10 receives the glass sheet G from the conveyor rolls 7 for transfer to a position above lower mold 4 for delivery onto the ring mold 5 or the lower mold 4.

Transfer mechanism 10 includes a pair of right and left guide rails 100, each including an inner rail 101 and an outer rail 102. The inner and outer rails 101, 102 extend from the downstream to the upstream ends of horizontal frame members 32. The outer rail 102 includes upstream rail portions extending towards heating furnace 2 and curved downwardly in semicircular shapes having distal ends thereof reaching the lower ends of the upstream vertical members of frame 3. Specifically, there is provided a semicircular curved portion 102a and a straight portion 102b, the latter extending horizontally from an upper end of the curved portion 102a.

The curved portion 102a and the straight portion 102b are separate from each other, being formed as separate members and disposed so that the curved portion 102a is fixed to vertical frame members 31 and projects toward heating furnace 2 while the straight portion 102b engages a rail 103 provided on horizontal frame member 32 and extends in the transverse direction (i.e., normal to the plane of drawing Figure 1). Thus, straight rail portions 102b are movable in the transverse direction. Inner rail 101 is the same shape as outer rail 102, so that inner rail 101 lies behind outer rail 102, in a superposed relation, in the front view of Figure 1.

However, a curved portion 101a and a straight portion 101b provided for inner rail 101 are not separate from each other, and only the straight portion 101b is fixed to the horizontal frame member 32.

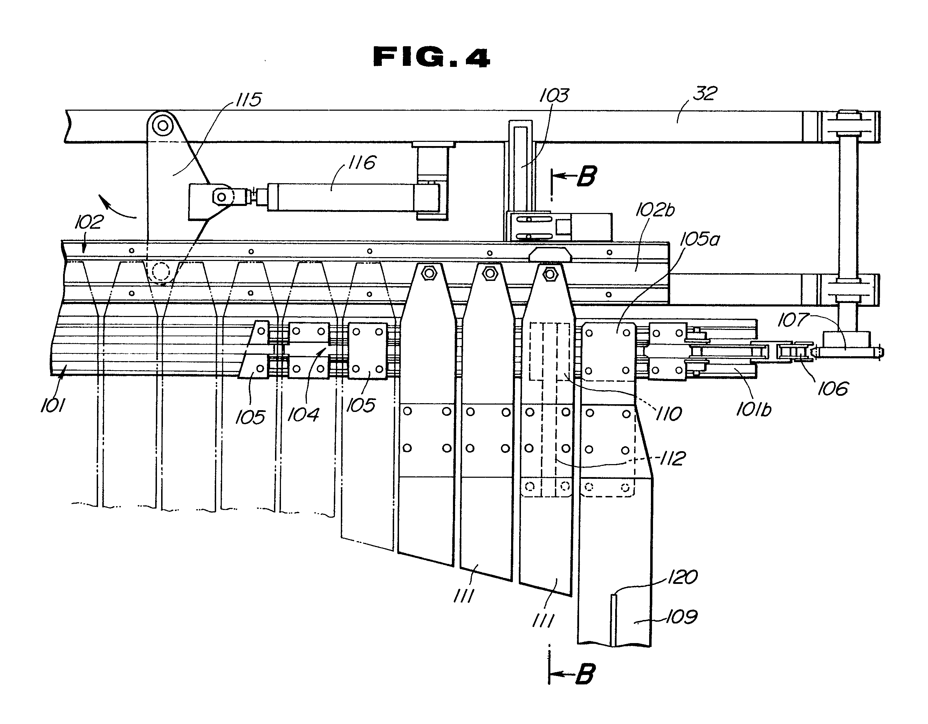

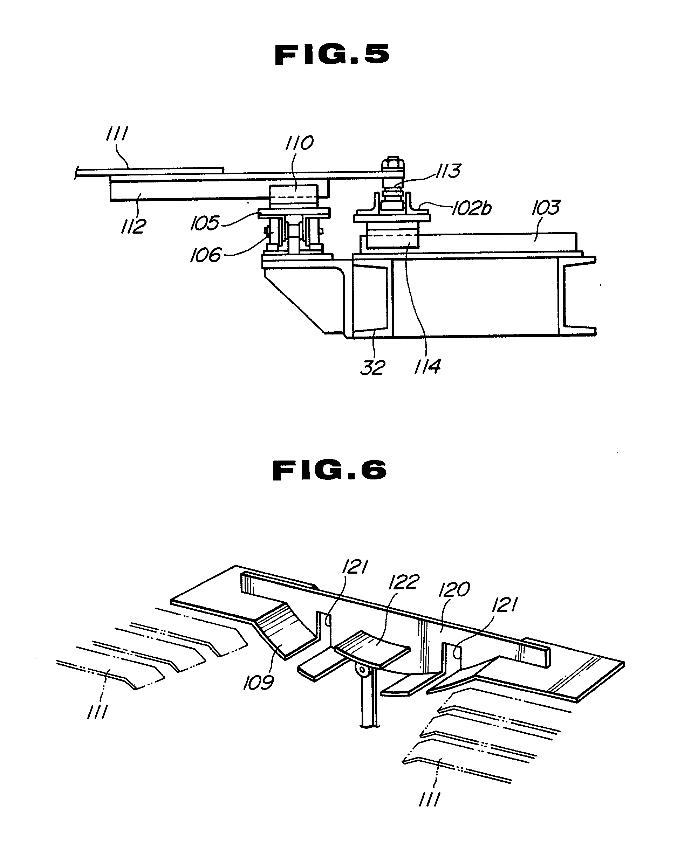

As shown in Figures 4 and 5, a pair of traveling assemblies are movable on and along the respective inner rails 101 in the feed direction of the glass sheet G. Each of the assemblies includes a running belt 104 of interconnected plate carriers 105 and casters 106 provided between adjacent plate carriers 105. A plate carrier 105 at the leading end of the running belt 104 is connected to the plate carrier 105 at the trailing end thereof by a chain 107, or the like, to provide an endless belt structure.

Chain 107 is trained around three sets of sprockets 107a, which are rotatably supported by pivot shafts on the upper and lower ends and on other appropriate locations of vertical frame member 31, as seen in Figures 1-3. Moreover, the chain 107 is disposed along the curved portion 101a of inner rail 101 in order not to obstruct exchange of the lower mold 4 or the ring mold 5.

As best seen in Figure 2, the two sprockets 107a associated respectively with the two traveling assemblies and located at the lowest position among the three sets of sprockets, are mounted on respective opposite ends of a shaft (unnumbered) extending horizontally between horizontal members of frame 3. The shaft is coupled by a further chain to a speed reducer (unnumbered) which reduces the rotational speed of a reversible motor 108. Torque is transmitted from motor 108 to the running belts 104 via a path including the above noted further chain, the speed reducer and shaft, and by sprocket 107a and chain 107. Reversible operation of motor 108 permits running belt 104 to reciprocate along the inner rail 101 in the longitudinal direction.

As seen in Fig. 4, a front end of the softened glass sheet G, fixed between two plates 105a at the leading ends of the running belts 104, is delivered from the conveyor rolls 7 and is received on a single front plate 109 for supporting the lower surface thereof. On the upper surfaces of the remaining plates 105, other than the leading plates 105a, there are provided transverse rails 110, as seen in Fig. 5. The transverse rails 110 are slidably engaged with guide portions 112 of a plurality of pairs of laterally spaced side plates 111 for supporting the lower side surfaces of glass sheet G. A caster 113 is attached to the outer end of each of the side plates 111 and is attached from above to the outer rail 102.

The straight portion 102b of outer rail 102 includes a guide portion 114 engaging rail 103, and a pivotable arm 115 is pivotally connected at one end thereof to horizontal frame beam 32 and at its other end is coupled to the straight portion 102b of outer rail 102. Arm 115 is connected to a rod of a cylinder unit 116, supported at a base end thereof by horizontal frame beam 32. Accordingly, upon actuation of cylinder unit 116 to project its rod, arm 115 begins to turn clockwise in Figure 4, as shown by the arrow, which moves straight portion 102b of outer rail 102, hence side plates 111 connected thereto, outwardly along rail 103.

In accordance with the invention, the front plate 109 and the side plates 111 are both gradually downwardly recessed towards the center portions thereof, as seen in Figure 6, to match the final shape of the curved glass sheet. That is, in view of an estimated deformation of the glass sheet under its own weight, the front plate and the side plates are recessed to prevent softening of only the central portion of the sheet glass while being transferred to the mold.

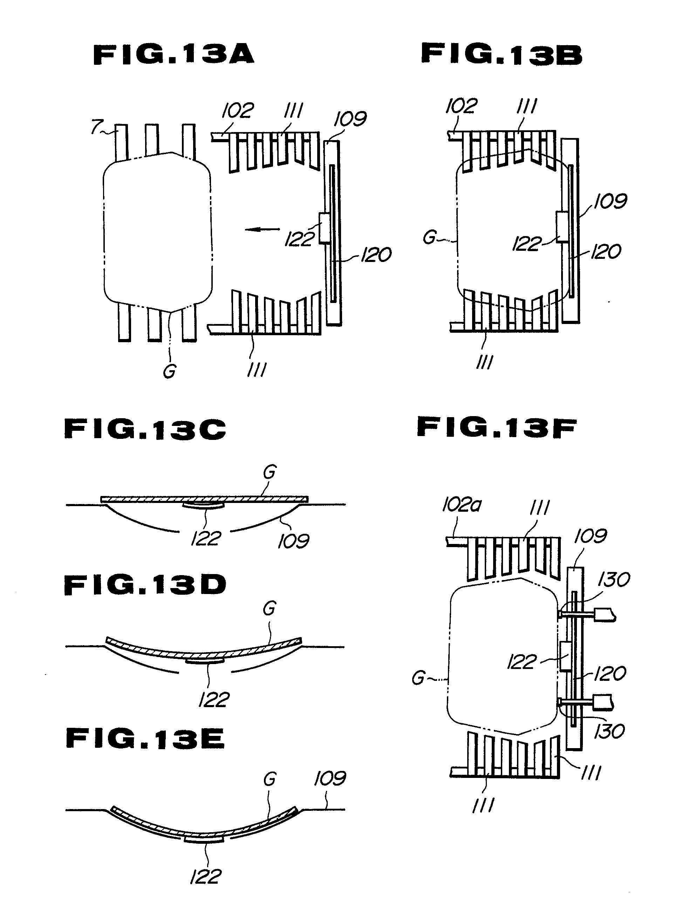

As also seen in Figure 4, a stopper plate 120 is attached to front plate 109. A stopper 130 (Fig. 13f) may be inserted into a slit 121 (Fig. 6) formed in stopper plate 120. The stopper is actuated by a cylinder unit (not shown) to move back and forth. A bearing member 122 is provided on the front side of the stopper plate 120.

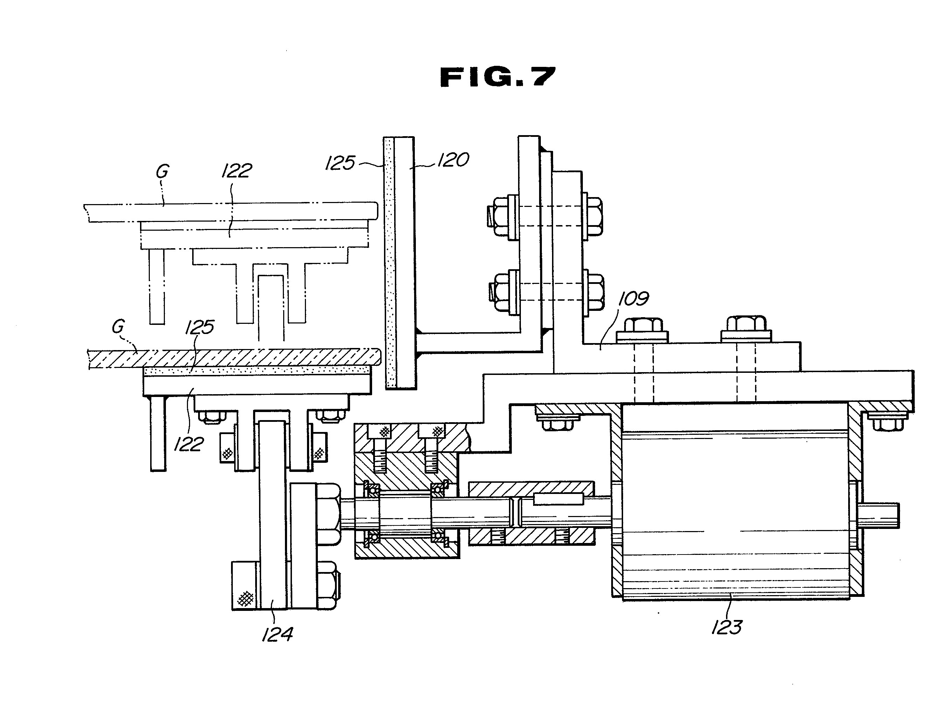

As best seen in Figure 7, a rotary actuator 123 may be fixed to the underside of front plate 109. Upon operation, torque is transmitted from the rotary actuator to bearing member 122 through a link 124, after conversion to linear motion, thus to move bearing member 122 vertically. A heat insulating fiber 125, which may be formed of aramid fiber, carbon fiber or the like, is preferably bonded to the surfaces of front plate 109, side plates 111, stopper plate 120 and bearing member 122. Each of these surfaces contacts the glass sheet, and the heat insulating fiber prevents the surfaces of the glass sheet G from being damaged thereby.

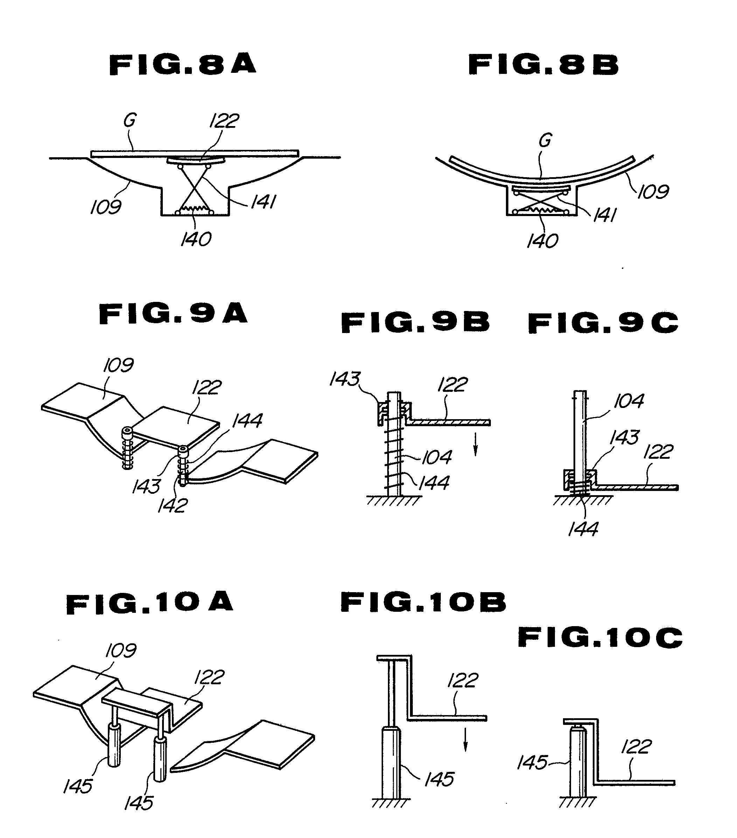

Referring now to Figures 8 through 12, there are shown several embodiments of mechanism used to move bearing member 122 in the vertical direction. In the embodiment of Figures 8a-8b, an X-type link 141 is used to support the bearing member 122. The link 141 is normally urged to a closed condition by a spring 140. Thus, if bearing member 122 is unloaded (without a glass sheet G) link 141 expands to raise the bearing member as shown in Fig. 8a. However, when the glass sheet G is bent downwardly under the action of its own weight, link 141 is contracted, thus lowering the bearing member as shown in Fig 8b.

In the embodiment of Figures 9a-9c, vertically upstanding guide rods 142 are provided on front plate 109. Bearing member 122 is provided with a plurality of bearing portions 143 which are fitted over guide rods 142. Springs 144 are provided around the guide rods to urge bearing member 122 upwardly. Accordingly, bearing member 122 is moved vertically in conformity with the weight of glass sheet G, as shown in Figs. 9b and 9c.

The embodiment of Figures 10a-10c is similar to that of Figs. 9a-9c, but utilizes an air cushion 145 to provide the vertical movement of bearing member 122.

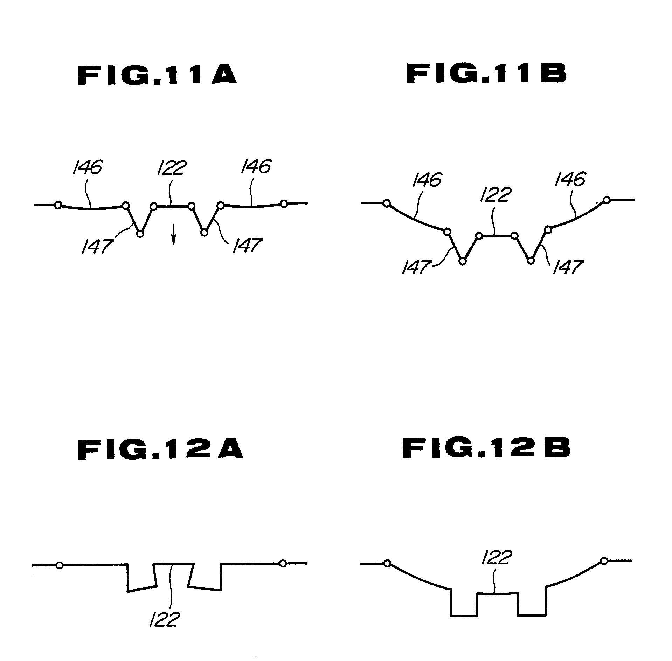

The embodiment of Figs. 11a-11b includes laterally spaced right and left wings 146 which are connected by links 147 to the bearing member 122. Springs, weights or the like are used to urge wings 146 to provide a normally elevated position for bearing member 122. Figs. 12a-12b show an embodiment wherein bearing member 122 itself comprises a leaf spring.

It should be noted that the mechanism for lowering bearing member 122 in response to the weight of the glass sheet, or by forcible application of drive forces to the glass sheet after a portion thereof has been placed on the bearing member, is not limited to the foregoing embodiments and may take any variation which may occur to one skilled in the art upon reading the present disclosure.

Operation of the curved glass manufacture apparatus in according with the invention is described as follows.

In operation, motor 108 is energized to rotate the sprockets 107a counterclockwise in Figure 1. Chains 107 are moved counterclockwise by the sprockets 107a to move the traveling assemblies, and hence the side plates 111 on and along the inner rails 101 from a "transfer position", indicated by solid lines in Figure 1 wherein the glass sheet is transferred onto the ring mold 5, to a "standby position", indicated by broken lines in which the glass sheet G is received from the conveyor rolls 7. Completion of movement of the traveling assemblies to the transfer position is detected by a detector such as stopper 130, a limit switch or the like, to affect operation of motor 108. When the traveling assemblies and thus the side plates 111 are in the standby position, the most downstream of the side plates, front plate 109, is positioned near the most downstream conveyor roll 7.

In the meanwhile, a glass sheet G is heated to its softening point in heating furnace 2 while being conveyed therein by an internal conveyor device, not shown. The glass sheet G is carried out from the heating furnace 2 on conveyor rolls 7 in a heated, softened, condition, and is moved until its leading end contacts stopper plate 120 on the front plate 109. Thus, during this time motor 108 is actuated to move running belts 104 rearwardly along the inner rails 101 (i.e., to the left in Fig. 1 or in the direction of the arrow in Fig. 13a). When the stopper 130, limit switch or the like senses that the leading end of glass sheet G has contacted the stopper plate 120, motor 108 is reversed, causing running belt 104 to move forward (to the right in Fig. 1) and, together with running belt 104, front plate 109 and side plates 111 also move in the forward direction.

Glass sheet G is delivered by the conveyor rolls 7 to the front plate 109 and the side plates 111 as these plates move forward. Thus, as illustrated in Fig. 13b, the lower surface of a front end of glass sheet G is supported on the front plate 109 and the lower side surfaces thereof are supported on the laterally opposing side plates 111. At this time, as illustrated in Fig. 13c, the glass sheet G is in a flat condition with the bearing member 122 being in contact with the lower surface of the glass sheet G.

Preferably, the feed speed of conveyor rolls 7 is synchronized with the speed of running belt 104, in order to deliver the glass sheet G smoothly from the conveyor rolls 7 to the front and side plates 109, 111.

Thereafter, when running belt 104 is being run continuously to transfer the glass sheet G forward along with the front and side plates 109, 111, the weight of the glass sheet G acts on bearing member 122 to cause the bearing member 122 to descend gradually while touching the lower surface of the glass sheet G, as illustrated in Fig. 13d. Finally, as illustrated in Fig. 13e, the upper surface of the bearing member 122 attains a flush relationship with the front plate 109, at which time stoppers 130 contact the leading edge of the glass sheet G.

Consequently, only the front and side plates 109, 111 continue to move forward, while glass sheet G continues to abut against stoppers 130 and thus remains stopped to allow front plate 109 to move from the lower surface of the front end of the glass sheet G. Next, cylinder unit 16 is operated to rotate arm 115 as hereinabove described. Thus, the straight portions 102b of the outer rails 102 on both sides of the frame are moved outwardly, or oppositely along rails 103, and side plates 111 now move as shown in FIG. 13f because the respective casters 113 of the side plates 111 are engaged with the straight portions 102b of the outer rails.

Upon such outward movement of the side plates 111, both sides of the glass sheet G come off side plates 111 and the glass sheet G is delivered onto the ring mold 5 awaiting below, such that the peripheral edge of the glass sheet G is supported on ring mold 5. In this manner, glass sheet G is shaped at its peripheral edge by being delivered onto ring mold 5.

The cylinder units 40 are then operated to raise the lower mold 4 while the upper mold is simultaneously lowered, to press and shape the glass sheet G therebetween. If the ring mold 5 is set at the height of the pressing position, it is advantageously unnecessary to remove the ring mold 5 at the time of pressing.

After pressing the glass sheet G to a prescribed shape, the lower and upper molds 4 and 6 are moved downwardly and upwardly, respectively, leaving glass sheet G supported at the lower surface of its peripheral edge on ring mold 5. In this condition, cooling air is blown onto the surface of the glass sheet G through the air ejecting jet holes 44 of the upper and lower molds 6 and 4 to temper the glass by quick cooling. While the glass sheet is being subjected to the quick cooling operation, motor 56 is actuated to reciprocate the ring mold 5 in a circular orbit, for example, so that the cooling air may blow uniformly on the surface of the glass sheet G.

Thereafter, glass sheet G is removed from the manufacturing apparatus 1 and a new glass sheet is pressed in a like manner.

It should be understood that the foregoing embodiments have been provided as illustrative of appratus for pressing the glass sheet by use of an upper mold. However, the glass sheet G may be bent solely under the action of its own weight, using only the lower mold 4 or the ring mold 5. Moreover, although in the foregoing description pressing and cooling are performed at the same location, it should be realized that cooling equipment may be positioned downstream of the pressing location.

**Claims**

1. An apparatus for manufacturing curved glass sheets by using a transfer mechanism for transferring and delivering a horizontal glass sheet, which has been heated to a temperature near a softening point, from a heating station to a position above a lower mold used to bend the glass sheet, characterized in that said transfer mechanism includes a front plate for supporting a lower surface of a front end of the glass sheet, said transfer mechanism also including laterally opposed side plates for supporting lower side surfaces of the glass sheet, said side plates movable between a first position for receiving the glass sheet from the heating station and a second position above the lower mold, spreading means for laterally spreading said side plates above the lower mold, said front plate having a predetermined curvature complementary to a curved shape of said glass sheet caused by its own weight, said front plate further including a bearing member which is vertically movable to contact the lower surface of the glass sheet in conformity with bend of the glass sheet.

2. In an apparatus for manufacturing curved glass sheets including a heating station for heating a glass sheet, a mold station including at least a lower mold for bending the heated glass sheet, a transfer mechanism for transferring and delivering the heated glass sheet from the heating station to a position above the lower mold, the transfer mechanism including laterally opposed side plates for supporting lower side surfaces of the glass sheet and lateral displacing means for moving said side plates towards one another to receive the glass sheet and for laterally separating said side plates above the lower mold to deliver the glass sheet to the lower mold, the transfer mechanism further including a front plate for supporting a lower surface of a front end of the glass sheet, the improvement comprising;

an arrangement for eliminating slippage between the glass sheet and the side and front plates caused by bending of the glass sheet caused by its own weight, wherein said front plate has a predetermined curvature complementary to a curved shape of said glass sheet caused by its own weight.

3. An apparatus as claimed in claim 2, wherein said arrangement for eliminating slippage further includes a bearing member of said front plate, said bearing member being vertically movable to contact the lower surface of the glass sheet in conformity with bending of the glass sheet.

4. An apparatus as claimed in claim 2 or 3, wherein said arrangement for eliminating slippage further includes a recessed portion in said side plates to provide thereto a predetermined curvature for accepting and supporting said glass sheet including a curvature caused by bending due to its own weight.

**FIG.1**

EP 0 351 207 A2

**FIG.2**

EP 0 351 207 A2

FIG.3

# FIG.4

EP 0 351 207 A2

EP 0 351 207 A2

# FIG.5

# FIG.6

FIG.7

# FIG.8A

# FIG.8B

# FIG.9A

# FIG.9B

# FIG.9C

# FIG.10A

# FIG.10B

# FIG.10C

# FIG.11 A

146    122    146

147    147

# FIG.11 B

146    122    146

147    147

# FIG.12 A

122

# FIG.12 B

122

**FIG.13A**

102  111  109

7~  122  120

G  111

**FIG.13B**

102  111

G  109  122  120

111

**FIG.13C**

G  122  109

**FIG.13D**

G  122

**FIG.13E**

G  109  122

**FIG.13F**

102a  111  109  130

G  122  120  130

111  111